# EUROPÄISCHE PATENTANMELDUNG

(11) **EP 3 951 240 A1**
(43) Veröffentlichungstag der Anmeldung: **09.02.2022**
(21) Anmeldenummer: 20020359.4
(22) Anmeldetag: 07.08.2020
(51) Int. Cl.: F17C 5/04, F17C 6/00

(54) **VERFAHREN UND EINE VORRICHTUNG ZUR BEREITSTELLUNG EINES KRYOGENEN GASES**

(71) Anmelder: Linde Kryotechnik AG, 8422 Pfungen (CH)
(72) Erfinder: Decker, Lutz, CH-8400 Winterthur (CH)
(74) Vertreter: Lu, Jing

(57) **Zusammenfassung**

Die Erfindung betrifft eine Vorrichtung (100) und ein Verfahren zur Bereitstellung eines kryogenen Gases, bei dem kryogenes Gas von einem Gebertank (200) über eine Transferleitung (220) in einen Empfängertank (300) transportiert wird, wobei verflüssigtes kryogenes Gas dem Gebertank entnommen und zumindest zum Teil als Treibstrom einem Beladungs-Ejektor (230) zugeführt wird und wobei Sattdampf aus dem Empfängertank als Saugstrom dem Beladungs-Ejektor zugeführt wird, wobei der den Beladungs-Ejektor verlassende Mischstrom dem Empfängertank zugeführt wird.

## Beschreibung

### Technisches Gebiet

Die vorliegende Erfindung betrifft ein Verfahren und eine Vorrichtung zur Bereitstellung eines kryogenen Gases, insbesondere zum Transport eines verflüssigten kryogenen Gases von einem Gebertank in einen Empfängertank, wobei das verflüssigte kryogene Gas beispielsweise verflüssigtes Erdgas (LNG), verflüssigter Wasserstoff (LH2), verflüssigter Sauerstoff (LOX) oder verflüssigtes Helium (LHe), sein kann. Bei dem Empfängertank handelt es sich typischerweise um den Tank eines Tankschiffes, aber auch um kleinere Tanks, wie beispielsweise Straßen-Trailer bzw. Containerfahrzeuge oder andere Tanks für verflüssigtes kryogenes Gas. Zur besseren Verständlickeit wird die Erläuterung der Erfindung in erster Linie auf Wasserstoff als kryogenes Gas bezogen, ohne jedoch die genannten anderen Anwendungen auszuschließen.

### Stand der Technik

Zur Umfüllung von flüssigem Wasserstoff (LH2) stehen bisher im Wesentlichen drei verschiedene Prozesse zur Verfügung. Zum ersten die Druckbetankung für eine schnelle Betankung, bei der der Spender- bzw. Gebertank unter einem höheren Druck als der Empfängertank steht. Mittels dieser Druckdifferenz wird LH2 aus dem Spendertank durch eine Transferleitung und ein Absperr- oder Regelventil in den Empfängertank getrieben. Dabei entstehen nicht unerhebliche Drosselverluste, d.h. ein Teil des LH2 verdampft. Üblicherweise wird dieser Verluststrom entweder kalt in die Umwelt geblasen, verbrannt oder über einen Anwärmer gegen Atmosphäre aufgewärmt und dem Verdichterkreis des Verflüssigers wieder zugeführt.

Zum zweiten eignet sich die gravimetrische Betankung für eine möglichst verlustfreie Umfüllung. Der Spendertank steht gegenüber dem Empfängertank deutlich erhöht. Über eine Transferleitung und Absperr- oder Regelventile fließt LH2 aufgrund des hydrostatischen Drucks in den Empfängertank. Drosselverluste können so minimiert und entweder wie bei der Druckbetankung gehandhabt werden oder über eine kommunizierende zweite Transferleitung direkt dazu genutzt werden, um das im Spendertank freiwerdende Flüssigkeitsvolumen durch Dampf zu ersetzen.

Schließlich wird drittens bei der maschinellen Betankung eine Flüssigkeitspumpe im Spendertank eingesetzt, die die notwendige Druckdifferenz entweder im Bereich der ersten Betankungsart (Druckbetankung) für eine möglichst schnelle Betankung erzeugt oder im Bereich der zweiten Betankungsart (gravimetrische Betankung) für eine möglichst verlustfreie Betankung erzeugt. Die Drosselverluste verhalten sich entsprechend den ersten beiden genannten Betankungsarten.

Bisher werden nur Straßen-Trailer bzw. LH2-Containerfahrzeuge mit einem maximalen Ladevolumen von < 52 m³ und kleinere Tanks mit LH2 beladen. Der Produktverlust beim Umfüllen solch geringer Mengen rechtfertigt keinen großen technischen Aufwand. Wasserstoff gilt jedoch als Energieträger der Zukunft. Hierzu werden sehr große Mengen über große Distanzen transportiert und zu einem möglichst niedrigen Endpreis verkauft werden müssen. Produktverluste müssen also prinzipiell minimiert werden. Es ist angestrebt, LH2-Tankschiffe zum Transport von flüssigem Wasserstoff einzusetzen. Aufgrund ihrer Größe müssen solche Schiffe zur Betankung an langen Landungsstegen (mehrere hundert Meter) anlegen und in Folge sehr lange kryogene Transferleitungen zwischen Gebertank und Empfängertank gebaut bzw. eingesetzt werden. Diese Leitungen haben sehr hohe thermische Lasten. Die Schiffe sollen in möglichst kurzer Zeit das über längere Zeit im Spender- bzw. Gebertank angesammelte LH2 aufnehmen. Hierbei entstehen die folgenden Probleme:

Zum einen müssen die Transferleitungen entweder jeweils vor der Betankung heruntergekühlt werden von Umgebungstemperatur auf eine LH2-Temperatur im Bereich von ca. 20 bis 30 K; dies dauert jedoch mehrere Stunden, wobei große Mengen an Produkt verdampfen. Zum anderen können die Transferleitungen permanent kalt gehalten werden mit einem vergleichsweise geringen Strom an LH2, bei vergleichbarem Verluststrom integriert über die Zeit. Schließlich verdrängt das steigende LH2-Niveau im Empfängertank des Tankschiffs beim Betanken kontinuierlich dasselbe Volumen an Gas, bei eingekühltem Tank als "Sattdampf' bezeichnet. Das Dichteverhältnis zwischen Flüssigkeit und Sattdampf beträgt bei Wasserstoff je nach herrschendem Druck ca. 40 bis 30.

Diese Verlustströme können nun entweder auf Seiten des Empfängertanks abgeblasen oder verbrannt werden oder müssen über eine entsprechende Transferleitung zurück zum Gebertank bzw. zur Verflüssigungsanlage transferiert werden. Insbesondere bei jeweils vor Betankung heruntergekühlten Transferleitungen oder im Fall der Verdrängung des Gasvolumens beim Betanken des Empfängertanks werden Transferleitungen mit großem Querschnitt benötigt, um den Druckverlust im Dampfstrom niedrig zu halten. Die Transferleitung muss wiederum heruntergekühlt oder permanent kalt gehalten werden.

Zudem entsteht bei einer mehrfach schnelleren Betankung auch ein verhältnismäßig großer Dampfstrom durch Verdrängung (dasselbe bei schneller Einkühlung der Transferleitung vor Betankung). Die Aufnahmekapazität auf Seiten des Spendertanks bzw. der Verflüssigungsanlage ist nur bei gravimetrischer Betankung gegeben und hier auch nur bei einer besonders großen kommunizierenden Transferleitung auf Gasseite.

Daraus ergeben sich für die Beladung von LH2-Tankern insgesamt sehr hohe Kosten für die Beladungsinfrastruktur, Produktverluste durch Dampferzeugung (durch Boil-off-Gas durch Wärmeeinfall, durch Verdrängungsgas, durch Druck- und Drosselverluste) sowie deutliche Einschränkungen der Beladungskapazität im Verhältnis zur Verflüssigungskapazität.

### Kurzfassung der Erfindung

Angesicht der oben genannten Probleme und Nachteile im Stand der Technik bei der Bereitstellung eines kryogenen Gases wie Wasserstoff soll die vorliegende Erfindung die Bereitstellung eines kryogenen Gases, inbesondere umfassend den Transport des kryogenen Gases von einem Spender- bzw. Gebertank zu einem Empfängertank, verbessern, insbesondere die Beladungskapazität bei geringeren Produkteverlusten erhöhen.

Die Erfindung schlägt hierzu ein Verfahren und eine Vorrichtung zur Bereitstellung eines kryogenen Gases gemäß den unabhängigen Patentansprüchen vor. Vorteilhafte Ausgestaltungen ergeben sich aus den jeweiligen Unteransprüchen und der nachfolgenden Beschreibung.

### Erläuterung der Erfindung

Erfindungsgemäß wird ein Verfahren zur Bereitstellung eines kryogenen Gases vorgeschlagen, bei dem kryogenes Gas von einem Gebertank in einen Empfängertank transportiert wird, wobei verflüssigtes kryogenes Gas dem Gebertank entnommen und zumindest zum Teil als Treibstrom einem Beladungs-Ejektor zugeführt wird. Bei dem Treibstrom handelt es sich vorzugsweise um eine unterkühlte Flüssigkeit, und der Beladungs-Ejektor ist derart ausgelegt, dass (zumindest zeitweise) der gesamte Betankungsstrom vom Gebertank zum Empfängertank durch den Treibstromeinlass des Beladungs-Ejektors zugeführt werden kann. Dies setzt in der Regel einen größer ausgelegten Ejektor voraus als er sonst in der Kältetechnik üblich ist. Vorzugsweise ist der Beladungs-Ejektor am Ende der Transferleitung, weiter vorzugsweise im Füllstutzen zum Empfängertank angeordnet. Weiterhin wird beim erfindungsgemäßen Verfahren Sattdampf aus dem Empfängertank als Saugstrom dem Beladungs-Ejektor zugeführt, wobei der den Beladungs-Ejektor verlassende Mischstrom dem Empfängertank zugeführt wird. Da zumindest zeitweise der gesamte Betankungsstrom als Treibstrom über den Beladungs-Ejektor gefahren wird, ist die Kapazität des Beladungs-Ejektors ausreichend, um den gesamten Dampfrückstrom, hier als "Sattdampf' bezeichnet - verursacht durch die bereits eingangs erwähnten Effekte der Verdrängung, Drosselung und des statischen Wärmeeinfalls - aus dem Empfängertank auf Tankdruck anzuheben und direkt wieder rückzuverflüssigen. Die Rücknahme-Transferleitung für den Sattdampf kann extrem kurz ausgeführt bzw. mit in denselben Füllstutzen integriert werden, in dem der Beladungs-Ejektor angeordnet ist.

Mit der vorliegenden Erfindung kann eine gegenüber der Verflüssigungsrate um den Faktor 10 höhere Betankungsrate erreicht werden. Konventionell muss die Transferleitung zur Betankung großzügig dimensioniert werden, um wie eingangs erläutert die Bildung von Dampf zu minimieren. Andernfalls würde der Druckabfall über solch lange Distanzen schnell ansteigen mit der Gefahr, den geplanten Durchsatz nicht erreichen zu können oder grosse Mengen an Dampfrückstrom abblasen zu müssen. Es ist daher besonders vorteilhaft, durch Druckanhebung vor der Betankung das verflüssigte kryogene Gas zu unterkühlen. Damit kann effektiv eine Dampfbildung auch bei höherem Druckverlust verhindert werden. Die bisher lange Transferleitung kann im Durchmesser und somit in ihren Kosten reduziert werden, was zusätzlich in geringeren Wärmeeinfällen und damit niedrigerem Produktverlust resultiert.

Die genannte Druckanhebung kann vorteilhafterweise im Gebertank durch Zufuhr von verflüssigtem beziehungsweise überkritischem kryogenem Gas aus einer Verflüssigungsanlage (im Rahmen dieser Anmeldung auch als "Coldbox" bezeichnet) in den Gebertank erfolgen. Hierdurch kann im Falle von Wasserstoff beispielsweise der Druck im Gebertank durch Zufuhr von kaltem Prozessgas aus dem Verflüssiger auf 5 bis 15 bar angehoben werden. Verflüssigter Wasserstoff kann dem Gebertank dann bei bis zu 15 bar bei einer Temperatur von 20 bis 24 K entnommen und über die Transferleitung als Treibstrom dem Beladungs-Ejektor zugeführt werden. Bei dem den Beladungs-Ejektor verlassenden Mischstrom handelt es sich in diesem Beispiel um einen 2-phasigen Strom mit ca. 80 bis 90% Flüssigkeit, Rest-Dampf bei ca. 1,1 bis 1,5 bar und einer Temperatur zwischen 20 und 23 K. Der gesamte Dampfrückstrom bzw. Sattdampf wird bei einem entsprechenden Druck von 1,1 bis 1,5 bar bei 20 bis 23 K über eine sehr kurze Rücknahmetransferleitung als Saugstrom dem Beladungs-Ejektor zugeführt. Der Saugstrom wird in bekannter Weise durch den Treibstrom im Ejektor angesaugt und durch Entspannung in der Mischkammer des Ejektors abgekühlt und rückverflüssigt. Wenn der gesamte Sattdampf aus dem Empfängertank durch den Beladungs-Ejektor aufgenommen wird, kann ein Teil des Betankungsstroms auch über eine Bypass-Leitung geführt werden, die den Beladungs-Ejektor umgeht und direkt in den Empfängertank (zusammen mit dem Mischstrom des Beladungs-Ejektors) führt.

Im Vergleich zum Stand der Technik ist eine höhere Betankungsrate bei einem geringen Verluststrom an Dampf möglich bzw. kann der gesamte Dampfrückstrom rückverflüssigt werden.

Die bereits erwähnte vorteilhafte Anhebung und Aufrechterhaltung des Drucks im Gebertank während des Betankungsbetriebs kann durch Verringerung der Kondensationsleistung als letzte Verflüssigungsstufe in der Verflüssigungsanlage erfolgen. Dadurch reduziert sich der Flüssigkeitsanteil bzw. steigt der Dampfanteil im Vorlauf zum Gebertank und damit auch der Volumenstrom in den Gebertank. Dadurch kann in einem ersten Schritt der Druck im Gebertank angehoben werden und im zweiten Schritt bei konstantem hohem Druck ein im Verhältnis zum dem Gebertank zufliessenden Massenstrom ein mehrfacher abfliessender Massenstrom aufrechterhalten werden. Die maximale Betankungsmenge wird erreicht, sobald nur noch Sattdampf zur Druckaufrechterhaltung in den Gebertank geführt wird.

Allgemein ist vorteilhaft, zur Bereitstellung von kryogenem Gas verflüssigtes oder überkritisches kryogenes Gas aus der genannten Verflüssigungsanlage bzw. Coldbox dem Gebertank zuzuführen. Hierdurch ist es möglich, beim Beispiel von Wasserstoff diesen bei einem Druck oberhalb 15 bar bei etwa 24 bis 30 K aus der Verflüssigungsanlage in den Gebertank zu leiten.

In einer weiteren vorteilhaften Ausgestaltung wird verflüssigtes kryogenes Gas aus der Verflüssigungsanlage bzw. Coldbox zumindest zum Teil einem Coldbox-Ejektor als Treibstrom zugeführt, wobei Sattdampf aus dem Gebertank als Saugstrom dem Coldbox-Ejektor zugeführt wird, wobei dann der den Coldbox-Ejektor verlassende Mischstrom in den Gebertank zurückgeführt wird. Im oben erwähnten Beispiel von Wasserstoff kann auf diese Weise verflüssigter, unterkühler Wasserstoff bei einem Druck von 1,2 bis 3 bar bei 20 bis 24 K dem Gebertank zugeführt werden. Anstelle des Coldbox-Ejektors kann auch eine Coldbox-Turbine eingesetzt werden. Zumindest ein Teil des verflüssigten kryogenen Gases aus der Verflüssigungsanlage bzw. Coldbox kann über eine Bypass-Leitung an Coldbox-Ejektor bzw. -Turbine vorbeigeführt werden und zusammen mit dem Mischstrom in den Gebertank geführt werden.

Eine weitere Anhebung der Betankungsrate ist prinzipiell möglich durch ein Anheben der Vorlauftemperatur zum Gebertank. Allerdings sinkt damit der para-Anteil im Wasserstoff-Vorlauf zum Gebertank und steigt der Wärmeeintrag in den Gebertank. Die Anlage muss dann nach Abschluss der Betankung wieder in den Normal-Verflüssigungsbetrieb eingeregelt werden. Damit bleibt die Verflüssigungsrate nach Abschluss der Betankung auf vorerst niedrigem Niveau; die volle Leistung wird erst wieder bei Stabilisierung des Normalbetriebs erreicht. Dafür kann die Betankungsdauer verkürzt werden, was bei der Schiffsbetankung ausschlaggebend für Kostenreduktion sein kann.

Zur Bereitstellung von kryogenem Gas, insbesondere zur Kühlung der Transferleitung zwischen Gebertank und Empfängertank, ist es vorteilhaft, verflüssigtes kryogenes Gas aus dem Gebertank über die Transferleitung als Treibstrom dem Beladungs-Ejektor und einer etwaigen Bypass-Leitung, die den Beladungs-Ejektor umgeht, zuzuführen und den den Beladungs-Ejektor bzw. die Bypass-Leitung verlassenden Strom über eine Rückführleitung als Saugstrom dem Coldbox-Ejektor oder einem Kühlkreis-Ejektor zuzuführen. Diese Maßnahme kann vor der Betankung oder aber permanent ausgeführt werden. Auf diese Weise können die (Füll-) Transferleitung und der Beladungs-Ejektor (permanent) über eine entsprechend kleine Rückführleitung kalt gehalten werden. Dieser Kühlkreis kann aufrechterhalten werden durch direkte Rückverflüssigung mittels des Kühlkreis-Ejektors bzw. dem bereits genannten Coldbox-Ejektor, wobei Kühlkreis- bzw. Coldbox-Ejektor viel kleiner ausgelegt sind als der genannte Beladungs-Ejektor. Ist der (kleine) Coldbox-Ejektor bereits im Anlagenkonzept zur Rückverflüssigung von Verdränger- und Drossel-Gasstrom ("Sattdampf') aus dem Gebertank während des Verflüssigungsbetriebs eingeplant, so übernimmt dieser praktischerweise diese Aufgabe. Der den Beladungs-Ejektor verlassende Strom gelangt in diesem Fall evtl. zusammen mit dem Sattdampf aus dem Gebertank als Saugstrom in die Saugstromzuleitung des Coldbox-Ejektors. Im Beispiel von Wasserstoff als kryogenem Gas liegt dieser Saugstrom typischerweise bei einem Druck von knapp über 1 bar, beispielsweise 1 bis 1,2 bar, in der Rückführleitung vor. Dieser wird dann insbesondere zusammen mit dem Sattdampf aus dem Gebertank dem Coldbox-Ejektor zugeführt. Dieser Prozess kann permanent erfolgen, ohne dass hohe Verlustraten aufgrund von Dampfbildung auftreten, da entstehender Dampf über den Coldbox- bzw. Kühlkreis-Ejektor rückverflüssigt werden kann.

Zusätzlich oder alternativ kann der genannte Kühlkreis aufrechterhalten werden durch warme Rückspeisung in eine Saugleitung eines zu der Verflüssigungsanlage gehörenden Kompressor-Systems, wobei die Rückspeisung über die Druckdifferenz zwischen Gebertank und der genannten Saugleitung aufrechterhalten wird.

Üblicherweise wird ein Tank für kryogene Gase nach Entladung oder Verbrauch des kryogenen Gases nicht vollständig entleert, sondern es verbleibt eine Restmenge im Tank zur Aufrechterhaltung eines gewünschten Drucks und einer gewünschten Temperatur. Vor erneuter Beladung des Empfängertanks kann der im Empfängertank vorhandene Sattdampf prinzipiell verwertet werden. Dies ist in der Praxis am Beispiel Wasserstoff nur sinnvoll, wenn Temperaturen unterhalb von 80 K vorliegen, da dann die Verunreinigungen im zu entlastenden Gas ausreichend niedrig sind. Zur Druckentlastung des Empfängertanks kann Sattdampf aus dem Empfängertank über eine Rückführleitung dem genannten Coldbox-Ejektor als Saugstrom zugeführt werden. Hierdurch bleibt die in der vorherigen Verflüssigung geleistete Umwandlungsarbeit von ortho- in para- Wasserstoff erhalten. Bei dieser Rückführleitung kann es sich insbesondere größtenteils um dieselbe Rückführleitung handeln, wie sie für den oben beschriebenen Kühlkreis verwendet wird. Alternativ zum Coldbox-Ejektor kann der genannte Kühlkreis-Ejektor eingesetzt werden, um Sattdampf aus dem Empfängertank diesem Ejektor als Saugstrom zuzuführen. Im Beispiel der Bereitstellung von Wasserstoff beträgt der Druck des Sattdampfs bei dieser Druckentlastung typischerweise > 1,2 bar bei einer Temperatur von unterhalb 100 K, vorzugsweise unterhalb 80 K.

Zusätzlich oder alternativ kann zur Druckentlastung des Empfängertanks Sattdampf aus dem Empfängertank einem Anwärmer zugeführt werden, um anschließend einem bzw. dem bereits genannten Kompressor-System zugeführt zu werden, das mit der Verflüssigungsanlage bzw. der Coldbox zur Zufuhr von verflüssigtem kryogenem Gas an den Gebertank verbunden ist oder deren Bestandteil ist. Der Anwärmer kann ein einfacher Wärmetauscher oder eine unisolierte Leitung sein, die gegen Umgebungsluft Wärme tauscht. Hierdurch geht jedoch die in der vorherigen Verflüssigung geleistete Umwandlungsarbeit von ortho- in para- Wasserstoff verloren. Im genannten Beispiel wird Wasserstoff bei typischerweise 1,1 bis 1,5 bar bei einer Temperatur von bis zu Umgebungstemperatur dann dem Kompressor-System der Verflüssigungsanlage zugeführt.

Die erfindungsgemäß erzielte Betankungsrate kann über den Faktor 10 gegenüber der Verflüssigungsrate weiter angehoben werden, indem der Transport von verflüssigtem kryogenem Gas aus dem Gebertank in den Empfängertank durch eine Pumpe und/oder einen Unterkühler im Gebertank und/oder in der Transferleitung zwischen Gebertank und Empfängertank unterstützt wird. Durch eine solche Pumpe insbesondere mit nachgeschaltetem Unterkühler, die bspw. im Gebertank am Einlass der Transferleitung angeordnet ist, lässt sich der Druck der transportierten Flüssigkeit erhöhen und die Temperatur derselbigen erniedrigen, ohne Druck und Temperatur im Gebertank zu verändern. Mit Vorteil jedoch wird diese Maßnahme kombiniert mit der oben beschriebenen Druckanhebung im Gebertank.

Im Falle von Wasserstoff kann durch die Erfindung sichergestellt werden, dass dieser bei hohem Druck (oberhalb 10 bar) als unterkühlte Flüssigkeit (20 bis 24 K) in der Transferleitung transportiert wird, so dass er auch nach Entspannung im Beladungs-Ejektor noch größtenteils (> 80%) in flüssigem Aggregatzustand vorliegt. Die Erfindung ermöglicht bei geringen Investitionskosten die Betankungsrate signifikant zu erhöhen, gleichzeitig die Vorkühlzeit der Transferleitung zu minimieren bzw. permanent aufrechtzuerhalten und Produktverluste durch Verdrängung und Drosselung zu minimieren. Es sei nochmals darauf hingewiesen, dass die Erfindung auch bei anderen verflüssigten Gasen, wie beispielsweise Erdgas, Sauerstoff oder Helium einsetzbar ist, und dass auch kleinere Tanks wie Trailer einsetzbar sind.

Die Erfindung betrifft weiterhin eine entsprechende Vorrichtung zur Durchführung des genannten erfindungsgemäßen Verfahrens. Sämtliche in Zusammenhang mit dem genannten erfindungsgemäßen Verfahren genannten Merkmale der Erfindung und ihre Vorteile sind in völlig analoger Weise für die erfindungsgemäße Vorrichtung gültig, auch wenn dies nicht expressis verbis ausgeführt ist. Im Folgenden soll die erfindungsgemäße Vorrichtung deshalb nur in einigen wesentlichen Ausführungsformen beschrieben werden, um unnötige Wiederholungen zu vermeiden.

Eine erfindungsgemäße Vorrichtung zur Bereitstellung eines kryogenen Gases umfasst einen Gebertank mit verflüssigtem kryogenem Gas, einen Empfängertank und eine Transferleitung zwischen Gebertank und Empfängertank, wobei ein Beladungs-Ejektor in der Transferleitung angeordnet ist, der einen Saugstromeinlass, einen Treibstromeinlass und einen Mischstromauslass aufweist. Der Treibstromeinlass und der Mischstromauslass des Beladungs-Ejektors sind an die genannte Transferleitung gekoppelt. Der Beladungs-Ejektor ist derart ausgelegt und angeordnet, dass verflüssigtes kryogenes Gas aus dem Gebertank zumindest zum Teil als Treibstrom dem Treibstromeinlass des Beladungs-Ejektors zugeführt werden kann und Sattdampf aus dem Empfängertank als Saugstrom über eine Rücknahme-Transferleitung dem Saugstromeinlass des Beladungs-Ejektors zugeführt werden kann, wobei der den Mischstromauslass des Beladungs-Ejektors verlassende Mischstrom dem Empfängertank schließlich zugeführt wird.

In einer vorteilhaften Ausgestaltung ist der Gebertank zur Zufuhr von verflüssigtem kryogenem Gas mit einer Verflüssigungsanlage bzw. Coldbox verbunden.

In einer weiteren vorteilhaften Ausgestaltung ist ein Coldbox-Ejektor mit einem Saugstromeinlass, einem Treibstromeinlass und einem Mischstromauslass vorgesehen, dessen Treibstromeinlass zur Zufuhr von verflüssigtem kryogenem Gas aus der Verflüssigungsanlage mit dieser verbunden ist, dessen Saugstromeinlass zur Zufuhr von Sattdampf aus dem Gebertank mit diesem verbunden ist und dessen Mischstromauslass mit dem Gebertank verbunden ist.

In einer weiteren vorteilhaften Ausgestaltung ist eine Rückführleitung vorgesehen, die den Mischstromauslass des Beladungs-Ejektors mit dem Saugstromeinlass des Coldbox-Ejektors oder mit einem Saugstromeinlass eines Kühlkreis-Ejektors verbindet.

In einer weiteren vorteilhaften Ausgestaltung ist eine Rückführleitung zur Leitung von Sattdampf aus dem Empfängertank vorgesehen, die den Empfängertank mit dem Saugstromeinlass des Coldbox-Ejektors oder des Kühlkreis-Ejektors verbindet.

In einer weiteren vorteilhaften Ausgestaltung ist eine Rückführleitung zur Leitung von Sattdampf aus dem Empfängertank vorgesehen, die den Empfängertank mit einem Anwärmer verbindet, der seinerseits mit einem Kompressor-System der Verflüssigungsanlage verbunden ist.

Es sei nochmals darauf hingewiesen, dass die Vorteile der erfindungsgemäßen Vorrichtung und deren Ausgestaltungen sich aus den analogen Ausgestaltungen des erfindungsgemäßen Verfahrens ergeben. Einzelne Merkmale der Erfindung können auch in anderer Weise als in der hier dargestellten Kombination miteinander kombiniert werden, soweit die Erfindung gemäß unabhängigen Patentansprüchen nicht verlassen wird.

### Kurzbeschreibung der Figuren

Figur 1 zeigt eine Übersicht über eine Ausführungsform der Erfindung zur Bereitstellung und zum Transport eines kryogenen Gases aus einem Gebertank in einen Empfängertank,
Figur 2 zeigt schematisch den Betrieb des Systems gemäß Figur 1 zur Rückverflüssigung von Sattdampf aus dem Gebertank,
Figur 3 zeigt den Betrieb des Systems gemäß Figur 1 zur Kühlung der Transferleitung,
Figur 4 zeigt den Betrieb des Systems gemäß Figur 1 zum Transport von kryogenem Gas in den Empfängertank,
Figur 5 zeigt den Betrieb des Systems gemäß Figur 1 zur Druckentlastung des Empfängertanks und
Figur 6 zeigt den Betrieb des Systems gemäß Figur 1 zum Transport von verflüssigtem kryogenem Gas in den Empfängertank mit Unterstützung einer Pumpe und eines Unterkühlers.

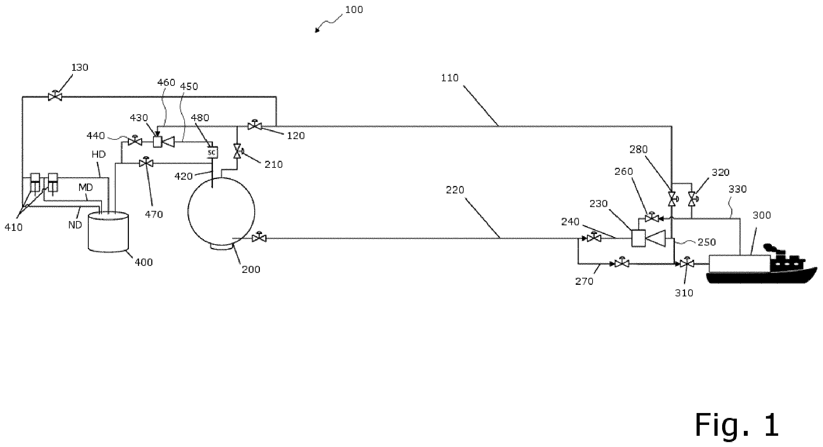

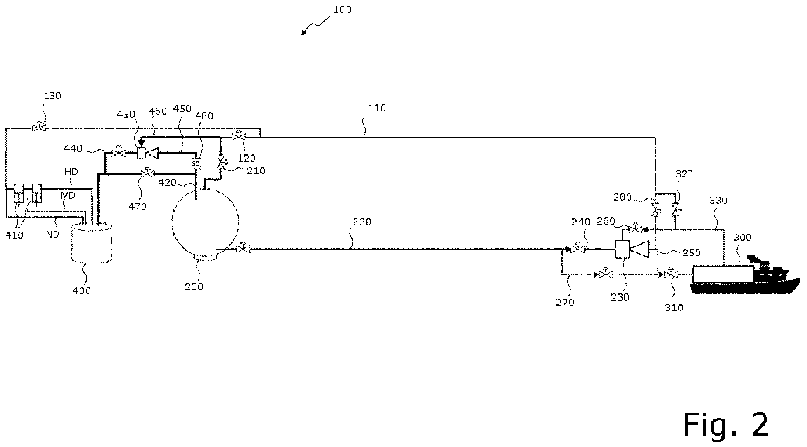

Die Figuren werden im Foglenden im Wesentlichen übergreifend behandelt, gleiche Bezugszeichen verweisen auf identische oder zumindest funktionsgleiche Elemente. Während Figur 1 eine schematische Übersicht über eine mögliche Vorrichtung bzw. ein System zur Bereitstellung eines kryogenen Gases liefert, zeigen die Figuren 2 bis 6 ausgewählte Betriebsarten dieser Vorrichtung bzw. dieses Systems durch Hervorhebung der beteiligten Komponenten.

Figur 1 zeigt schematisch eine Vorrichtung bzw. ein System zur Bereitstellung eines verflüssigten kryogenen Gases, wobei im Folgenden beispielhaft auf Wasserstoff Bezug genommen wird. Wasserstoff soll in flüssiger Form aus einem Gebertank 200 in einen Empfängertank 300 transportiert werden. Hierzu wird eine Transferleitung 220 vom Gebertank 200 zu einer Anschlussstelle für den Empfängertank 300 gelegt. Diese Transferleitung 220 weist zumindest ein ansteuerbares Ventil auf, wobei hier und im Folgenden entweder eine betreffende Leitung oder das betreffende Ventil in dieser Leitung mit einer Bezugsziffer bezeichnet ist. Selbstverständlich kann ein Fluid nur dann durch die Leitung strömen, wenn das betreffende Ventil geöffnet ist. Stromabwärts der Transferleitung 220 ist ein Beladungs-Ejektor 230, insbesondere im Füllstutzen, angeordnet. 240 bezeichnet die Treibstromleitung, 250 die Mischstromleitung und 260 die Saugstromleitung bzw. 240 den Treibstromeinlass, 260 den Saugstromeinlass und 250 den Mischstromauslass des Beladungs-Ejektors 230 bzw. bei geöffneten entsprechenden Ventilen den Treibstrom, Mischstrom und Saugstrom. Zur Umgehung des Beladungs-Ejektors 230 ist ein Beladungs-Ejektor Bypass 270 vorgesehen. Mischstromleitung 250 und Bypass 270 werden über ein Ladeventil 310 zusammengeführt als Zuleitung in den Empfängertank 300. Eine Rücknahme-Transferleitung 330 ist zur Ableitung von Sattdampf aus dem Empfängertank 300 vorgesehen. Über ein entsprechendes Ventil ist diese Rücknahme-Transferleitung 330 mit einer Überdruck-Rücknahmeleitung 320 und einer daran anschließenden Rückführleitung 110 verbunden. Die Mischstromleitung 250 des Beladungs-Ejektors 230 ist über eine Kühlkreis-Transferleitung 280 ebenfalls mit der Rückführleitung 110 über ein Ventil verbunden.

Eine Verflüssigungsanlage, die in Form einer Coldbox vorliegen kann, ist mit 400 bezeichnet. Sie umfasst in diesem Ausführungsbeispiel ein Kompressor-System 410 (hier 2-stufig), über das Wasserstoff in drei verschiedenen Druckbereichen zur Verfügung gestellt werden kann (Niederdruck von ca. 1 bis 3 bar, ND, sowie Mitteldruck von 3 bis 12 bar, insbesondere von ca. 4 bis 5 bar, MD, und Hochdruck von 14 bis 80 bar, insbesondere von bis zu 20 bar, HD). Die Coldbox 400 kann einen Produktstrom 420 in den Gebertank 200 leiten. Im Gebertank 200 liegt Flüssig-Wasserstoff sowie Sattdampf vor. Letzterer kann in diesem Ausführungsbeispiel rückverflüssigt werden. Hierzu ist eine Rücknahmeleitung 210 mit entsprechendem Ventil vorgesehen, die mit dem Saugstromanschluss 460 bzw. der Saugstromleitung eines Coldbox-Ejektors 430 verbunden ist. Diesem Coldbox-Ejektor 430 wird verflüssigter Wasserstoff unter hohem Druck (größer 15 bar) bei 24 bis 30 K als Treibstrom (bei geöffnetem Ventil) zugeführt. Die entsprechende Treibstromleitung ist mit 440 bezeichnet. Die Mischstromleitung 450 des Coldbox-Ejektors 430 führt zu einem Subcooler 480, der eine weitere Temperaturabsenkung des entspannten Fluids vornehmen kann. Der Produktstrom 420 gelangt schließlich in den Gebertank 200. Der Coldbox-Ejektor 430 kann über die Bypass-Leitung 470 umgangen werden.

Die bereits genannte Rückführleitung 110, die von der Empfängertankseite zur Gebertankseite verläuft, ist zum einen mit einer Kühlkreis-Rücknahmeleitung 120 verbunden, die ihrerseits mit der Saugstromleitung 460 des Coldbox-Ejektors 430 verbunden ist. Sämtliche Verbindungen sind selbstverständlich ventilgesteuert. Andererseits ist die Rückführleitung 110 mit einer Verflüssiger-Rücknahmeleitung 130 verbunden, die ihrerseits zu dem Kompressor-System 410 der Verflüssigungsanlage 400 führt.

Mit diesem in Figur 1 dargestellten System 100 lassen sich in vorteilhafter Weise die Erfindung und sämtliche Ausgestaltungen der Erfindung realisieren, wobei verschiedene Betriebsmodi anhand der folgenden Figuren 2 bis 6 im Einzelnen beschrieben werden.

Figur 2 illustriert schematisch die Befüllung des Gebertanks 200 mit der Möglichkeit der Rückverflüssigung von Sattdampf im Gebertank 200. Die beteiligten Leitungen sind durch Fettdruck hervorgehoben. Im Übrigen entspricht das hier dargestellte System 100 demjenigen der Figur 1. Aus einer an sich bekannten Coldbox 400 wird verflüssigter Wasserstoff bei hohem Druck (über 15 bar) bei einer Temperatur von typischerweise 24 bis 30 K als Treibstrom über den Coldbox-Ejektor 430 geleitet. In diesem Zustand liegt der Wasserstoff als überkritischer Wasserstoff vor. Anstelle des Coldbox-Ejektors 430 kann auch eine Turbine oder ein Joule-Thomson Ventil eingesetzt werden. Der entspannte Wasserstoff gelangt in den Subcooler 480 und von dort als unterkühlte Flüssigkeit bei einem Druck von 1,2 bis 3 bar und einer Temperatur von 20 bis 24 K als Produktstrom 420 in den Gebertank 200. Die hier und im Folgenden genannten Werte für Druck und Temperatur sind selbstverständlich nur beispielhaft und bevorzugt, je nach Anwendung und Auslegung der einzelnen Systemkomponenten kann der Fachmann andere Werte wählen. Entstandener Sattdampf im Gebertank 200 kann bei dieser Anordnung aus dem Gebertank 200 abgezogen werden, indem die entsprechende Rücknahmeleitung 210 mit der Saugstromleitung 460 des Coldbox-Ejektors 430 verbunden wird. Der Sattdampf gelangt dann bei einem Druck von 1,3 bis 3 bar und einer Temperatur von etwa 21 bis 25 K in den Saugstromanschluss des Coldbox-Ejektors 430. Wenn eine Rückverflüssigung von Sattdampf nicht notwendig ist bzw. wenn zusätzlich zu dem hier beschriebenen Kreislauf verflüssigter Wasserstoff in den Gebertank 200 geleitet werden soll, kann die Bypass-Leitung 470 geöffnet werden, durch die direkt flüssiger Wasserstoff in den Gebertank 200 geleitet werden kann.

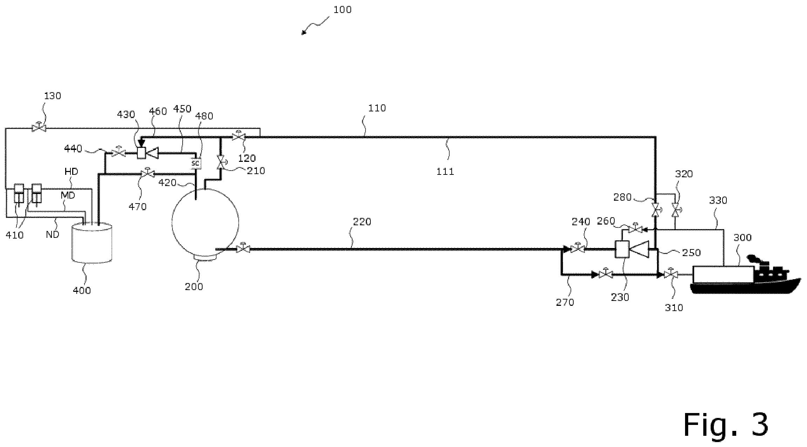

Figur 3 illustriert den Betriebsmodus zur Kühlung der Transferleitung 220 und des Beladungs-Ejektors 230, insbesondere vor einer Betankung des Empfängertanks 300, wobei der hier dargestellte Kühlkreis auch permanent aufrechterhalten werden kann. Zur Kühlung der Transferleitung 220 wird Flüssig-Wasserstoff bei 1,3 bis 3 bar und etwa 21 bis 25 K aus dem Gebertank 200 über die Transferleitung 220 zum Beladungs-Ejektor 230 geführt. Zweckmäßigerweise wird ein Teil des Wasserstoffs auch über die Bypass-Leitung 270 geführt, um diese zu kühlen. Die Ströme vereinigen sich in der Mischstromleitung 250 und werden über die Kühlkreis-Transferleitung 280 und die Rückführleitung 110 zur Gebertankseite zurückgeführt. Der auf einen Druck von etwa unterhalb 1,2 bar entspannte Wasserstoff kann nun bei entsprechender Ventilstellung über die Kühlkreis-Rücknahmeleitung 120 der Saugstromleitung 460 des Coldbox-Ejektors 430 zugeführt werden, wobei hier - wie oben beschrieben - zusätzlich Sattdampf aus dem Gebertank 200 über die Rücknahmeleitung 210 zugegeben werden kann. Der Einfachheit halber soll die Rückführleitung 111 die Leitungen 280 und 110 und 120 zusammengefasst bezeichnen. Die Wiederbefüllung des Gebertanks 200 erfolgt in gleicher Weise wie im Betriebsmodus der Figur 2 wie oben beschrieben. Aufgrund der im Vergleich zum Stand der Technik viel kleiner dimensionierten Transfer- und Rückführleitungen 220, 111 kann dieser Kühlkreis permanent aufrechterhalten werden. Im dargestellten Fall kann der Coldbox-Ejektor 430, der für den Betriebsmodus gemäß Figur 2 ohnehin vorgesehen ist, auch für den Betriebsmodus gemäß Figur 3 verwendet werden. Andernfalls kann hier ein entsprechend klein dimensionierter Kühlkreis-Ejektor eingesetzt werden. Alternativ oder zusätzlich kann der entspannte Wasserstoff von der Rückführleitung 110 bei entsprechender Ventilstellung in die Verflüssiger-Rücknahmeleitung 130 geleitet und von dort in die Saugleitung des zur Verflüssigungsanlage 400 gehörenden Kompressor-Systems 410 rückgespeist werden. Diese Rückspeisung wird aufrechterhalten über die Druckdifferenz zwischen Gebertank 200 und der Saugleitung des Kompressor-Systems 410.

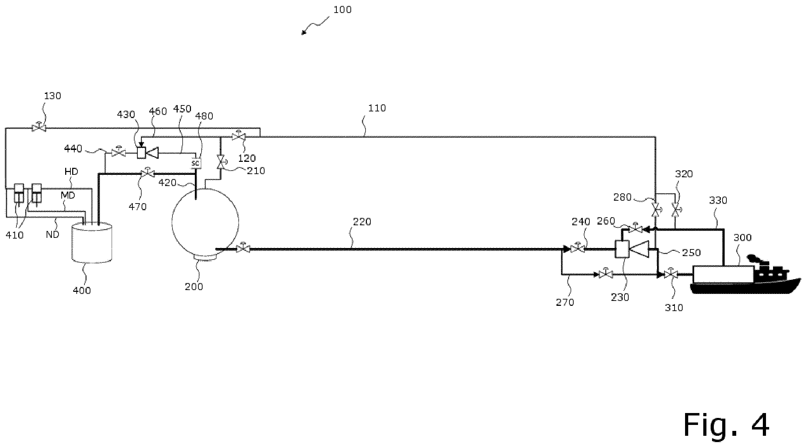

Figur 4 zeigt den Betriebsmodus der Betankung, also des Transports von verflüssigtem Wasserstoff aus dem Gebertank 200 über die Transferleitung 220 in den Empfängertank 300.

Zur Betankung wird gemäß Figur 4 Wasserstoff aus dem Gebertank 200 über die Transferleitung 220 der Treibstromleitung 240 des Beladungs-Ejektors 230 zugeführt bzw. mündet die Transferleitung 220 in den Treibstromanschluss des Beladungs-Ejektors 230. Die Mischstromleitung 250 des Beladungs-Ejektors 230, die gleichsam als Fortsetzung der Transferleitung 220 betrachtet werden kann, wird über ein Ventil 310, das Ladeventil, an den Empfängertank 300 angeschlossen. In diesem Ausführungsbeispiel erfolgt die Betankung mit unterkühltem Wasserstoff bei hohem Druck. Durch diese Unterkühlung wird sichergestellt, dass auch nach Entspannung durch den Beladungs-Ejektor 230 der Wasserstoff nahezu vollständig in flüssiger Phase vorliegt. Da der gesamte Betrankungsstrom als Treibstrom über den Beladungs-Ejektor 230 gefahren wird, ist die Kapazität dieses Ejektors ausreichend, um den gesamten Dampfrückstrom, verursacht durch Verdrängung, Drosselung und statischen Wärmeeinfall, aus dem Empfängertank 300 abzuziehen, auf Tankdruck anzuheben und direkt wieder rückzuverflüssigen. Hierzu wird der Sattdampf aus dem Empfängertank 300 über die Rücknahme-Transferleitung 330 dem Saugstromanschluss des Beladungs-Ejektors 230 zugeführt. Der Sattdampf liegt in diesem Beispiel bei einem Druck von 1,1 bis 1,5 bar und einer Temperatur von etwa 20,6 bis 23 K vor. Aus der Mischstromleitung 250 des Beladungs-Ejektors 230 gelangt dann ein 2-phasiges Gemisch von etwa 80 bis 90% Flüssig-Wasserstoff mit 1,1 bis 1,5 bar und einer Temperatur von etwa 20,6 bis 23 K über das Ladeventil 310 in den Empfängertank 300. Die Rücknahme-Transferleitung 330 kann extrem kurz ausgeführt bzw. mit in denselben Füllstutzen integriert werden.

Um während der Betankung unterkühlte Flüssigkeit bei hohem Druck in die Transferleitung 220 leiten zu können, ist es vorteilhaft, den Druck im Gebertank 200 während des Betankungsbetriebes anzuheben und aufrecht zu erhalten. Die Druckanhebung erfolgt durch Verringerung der Kondensationsleistung als letzte Verflüssigungsstufe in der Verflüssigungsanlage 400. Dadurch reduziert sich der Flüssigkeitsanteil bzw. steigt der Dampfanteil im Vorlauf zum Gebertank 200. Die maximale Betankungsmenge wird erreicht, sobald nur noch Sattdampf zur Druckaufrechterhaltung in den Gebertank 200 geführt wird.

Der Transport unterkühlter Flüssigkeit in der Transferleitung 220 verhindert wirksam Dampfbildung auch bei höherem Druckverlust aufgrund der Transportstrecke. Die Transferleitung 220 kann folglich im Durchmesser und in der Wärmeisolation reduziert werden, wodurch Kosten eingespart werden.

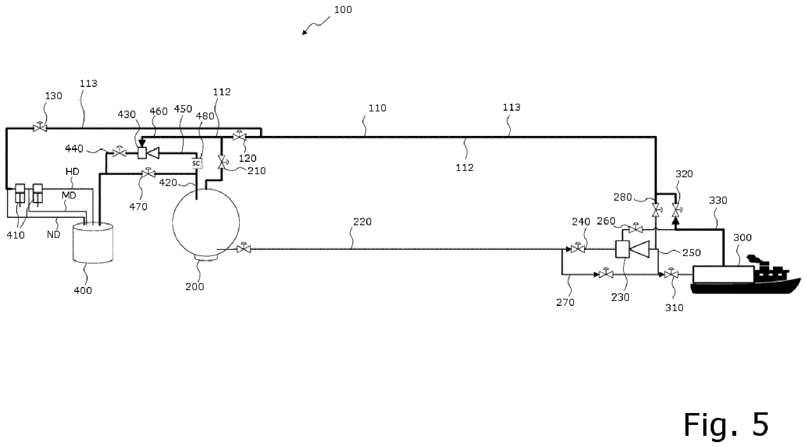

Figur 5 zeigt den Betriebsmodus der Druckentlastung des Empfängertanks 300, bei der Sattdampf aus dem fast leeren Empfängertank 300 vor der Betankung wieder zurückgewonnen werden kann.

Wie aus Figur 5 ersichtlich, wird die Rücknahme-Transferleitung 330 durch entsprechende Ventilstellung mit der Überdruck-Rücknahmeleitung 320 und diese mit der Rückführleitung 110 und der (Kühlkreis-) Rücknahmeleitung 120 verbunden. Die hierdurch entstandene Rückführleitung sei mit 112 bezeichnet. Über die Rückführleitung 112 wird folglich gasförmiger Wasserstoff bei einem Druck von etwa 1,2 bar oder höher bei Temperaturen unterhalb 100 K, vorzugsweise unterhalb 80 K, auf die Gebertankseite geleitet. Dort bestehen je nach Ventilstellung zwei alternative oder auch additive Verfahrensmöglichkeiten. Zum einen kann der rückgeführte Wasserstoff dem Saugstromanschluss des Coldbox-Ejektors 430 zugeführt werden, wobei hierbei auch Sattdampf aus dem Gebertank 200 über die Rücknahmeleitung 210 mit zugeführt werden kann. Hierdurch bleibt die in der vorherigen Verflüssigung geleistete Umwandlungsarbeit von ortho- in para- Wasserstoff erhalten. Im Übrigen entspricht das Verfahren dann demjenigen in Zusammenhang mit Figur 2 erläuterten. Andererseits kann der Wasserstoff über die Rückführleitung 113, die die Leitungen 330, 320, 110 und 130 kombiniert, auch (zumindest zum Teil) einem Anwärmer 140 zugeführt werden. Bei dem Anwärmer 140 kann es sich auch einfach um eine unisolierte Leitung handeln, so dass Wärme aus der Umgebung aufgenommen wird. Die in der vorherigen Verflüssigung geleistete Umwandlungsarbeit von ortho- in para-Wasserstoff geht dabei verloren. Der sich hieraus ergebende Wasserstoff kann dann bei etwa 1,1 bis 1,5 bar und einer Temperatur unterhalb oder gleich Umgebungstemperatur dem Kompressor-System 410 zugeleitet werden. In der Praxis sollte sichergestellt werden, dass dieser Betriebsmodus nur bei Temperaturen unterhalb 80 K im Empfängertank 300 zum Einsatz kommt, um zu verhindern, dass auf diese Weise Verunreinigungen in den Gebertank 200 gelangen.

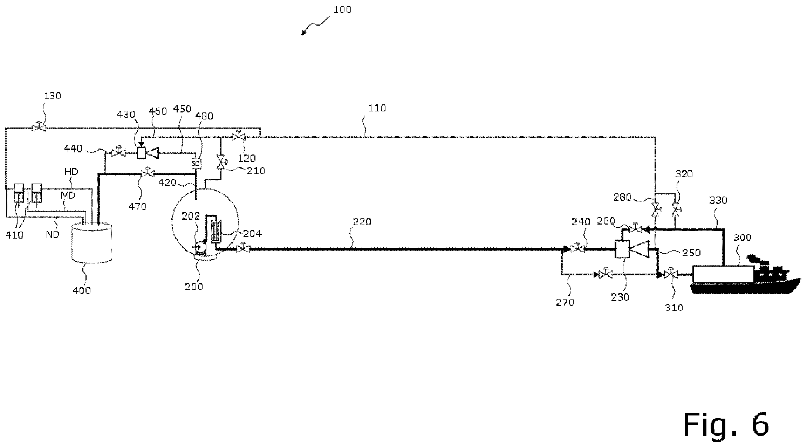

Schließlich ist in Figur 6 ein weiterer Betriebsmodus dargestellt, um die Betankungsrate nochmals zu erhöhen.

Figur 6 zeigt eine in den Gebertank 200 integrierte Pumpe 202 mit nachgeschaltetem Unterkühler 204. Hierdurch kann, ohne den Druck im Gebertank 200 weiter zu erhöhen, der Druck des Wasserstoffs in der Transferleitung 220 weiter erhöht werden. Die übrigen Verfahrensschritte entsprechen dem Betankungsvorgang, wie er in Zusammenhang in Figur 4 ausführlich erläutert wurde. Bei der in Figur 6 dargestellten Vorgehensweise kann die Betankungsrate noch über den Faktor 10 gegenüber der Verflüssigungsrate angehoben werden.

### Bezugszeichenliste

- 100: Vorrichtung, System
- 110: Rückführleitung
- 111: Rückführleitung
- 112: Rückführleitung
- 113: Rückführleitung
- 120: Kühlkreis-Rücknahmeleitung
- 130: Verflüssiger-Rücknahmeleitung
- 140: Anwärmer

- 200: Gebertank
- 202: Pumpe
- 204: Unterkühler
- 210: Rücknahmeleitung Gebertank
- 220: Transferleitung
- 230: Beladungs-Ejektor
- 240: Treibstromleitung
- 250: Mischstromleitung
- 260: Saugstromleitung
- 270: Beladungs-Ejektor Bypass
- 280: Kühlkreis-Transferleitung

- 300: Empfängertank
- 310: Ladeventil
- 320: Überdruck-Rücknahmeleitung
- 330: Rücknahme-Transferleitung

- 400: Verflüssigungsanlage, Coldbox
- 410: Kompressor-System
- 420: Produktstromleitung
- 430: Coldbox-Ejektor
- 440: Treibstromleitung
- 450: Mischstromleitung
- 460: Saugstromleitung
- 470: Coldbox-Ejektor Bypass
- 480: Subcooler

## Patentansprüche

1. Verfahren zur Bereitstellung eines kryogenen Gases, bei dem kryogenes Gas von einem Gebertank (200) über eine Transferleitung (220) in einen Empfängertank (300) transportiert wird, wobei verflüssigtes kryogenes Gas dem Gebertank entnommen und zumindest zum Teil als Treibstrom einem Beladungs-Ejektor (230) zugeführt wird und wobei Sattdampf aus dem Empfängertank (300) als Saugstrom dem Beladungs-Ejektor (230) zugeführt wird, wobei der den Beladungs-Ejektor (230) verlassende Mischstrom dem Empfängertank (300) zugeführt wird.

2. Verfahren nach Anspruch 1, bei dem der Transport von verflüssigtem kryogenem Gas aus dem Gebertank in den Empfängertank durch eine Pumpe (202) und/oder einen Unterkühler (204) im Gebertank (200) und/oder in der Transferleitung (220) zwischen Gebertank und Empfängertank unterstützt wird.

3. Verfahren nach Anspruch 1 oder 2, wobei zur Bereitstellung von kryogenem Gas verflüssigtes kryogenes Gas aus einer Verflüssigungsanlage (400) dem Gebertank (200) zugeführt wird.

4. Verfahren nach Anspruch 3, wobei der Druck im Gebertank (200) zum Transport von kryogenem Gas in den Empfängertank (300) durch Zufuhr von verflüssigtem oder überkritischem kryogenem Gas aus der Verflüssigungsanlage (400) in den Gebertank (200) erhöht wird.

5. Verfahren nach Anspruch 3 oder 4, wobei verflüssigtes oder überkritisches kryogenes Gas aus der Verflüssigungsanlage (400) zumindest zum Teil einem Coldbox-Ejektor (430) als Treibstrom zugeführt wird, wobei Sattdampf aus dem Gebertank (200) als Saugstrom dem Coldbox-Ejektor (430) zugeführt wird, wobei der den Coldbox-Ejektor verlassende Mischstrom in den Gebertank zurückgeführt wird.

6. Verfahren nach einem der Ansprüche 1 bis 5, wobei verflüssigtes kryogenes Gas aus dem Gebertank (200) über die Transferleitung (220) als Treibstrom dem Beladungs-Ejektor (230) zugeführt wird und der den Beladungs-Ejektor verlassende Strom über eine Rückführleitung (111) als Saugstrom dem Coldbox-Ejektor (430) nach Anspruch 5 oder einem Kühlkreis-Ejektor zugeführt wird.

7. Verfahren nach einem der vorhergehenden Ansprüche, soweit auf Anspruch 5 oder 6 bezogen, bei dem zur Druckentlastung des Empfängertanks (300) Sattdampf aus dem Empfängertank über eine Rückführleitung (112) als Saugstrom dem Coldbox-Ejektor (430) oder dem Kühlkreis-Ejektor zugeführt wird.

8. Verfahren nach einem der vorhergehenden Ansprüche, soweit auf Anspruch 3 zurückbezogen, bei dem zur Druckentlastung des Empfängertanks (300) Sattdampf einem Anwärmer (140) zugeführt wird, um anschließend einem Kompressor-System (410) zugeführt zu werden, das mit der Verflüssigungsanlage (400) zur Zufuhr von verflüssigtem kryogenem Gas verbunden ist oder deren Bestandteil ist.

9. Vorrichtung (100) zur Durchführung eines Verfahrens gemäß einem der Ansprüche 1 bis 8.

10. Vorrichtung nach Anspruch 9 umfassend einen Gebertank (200) mit verflüssigtem kryogenem Gas, einen Empfängertank (300) und eine Transferleitung (220) zwischen Gebertank und Empfängertank, wobei ein Beladungs-Ejektor (230) in der Transferleitung (220) angeordnet ist, der einen Saugstromeinlass, einen Treibstromeinlass und einen Mischstromauslass aufweist und derart ausgelegt und angeordnet ist, dass verflüssigtes kryogenes Gas aus dem Gebertank (200) zumindest zum Teil als Treibstrom dem Treibstromeinlass des Beladungs-Ejektors (230) zugeführt wird und Sattdampf aus dem Empfängertank (300) als Saugstrom über eine Rücknahme-Transferleitung (330) dem Saugstromeinlass des Beladungs-Ejektors (230) zugeführt wird und wobei der den Mischstromauslass des Beladungs-Ejektors (230) verlassende Mischstrom dem Empfängertank (300) zugeführt wird.

11. Vorrichtung nach Anspruch 10, wobei der Gebertank (200) zur Zufuhr von verflüssigtem kryogenem Gas mit einer Verflüssigungsanlage (400) verbunden ist.

12. Vorrichtung nach Anspruch 11, wobei ein Coldbox-Ejektor (430) mit einem Saugstromeinlass, einem Treibstromeinlass und einem Mischstromauslass vorgesehen ist, dessen Treibstromeinlass zur Zufuhr von verflüssigtem kryogenem Gas aus der Verflüssigungsanlage (400) mit dieser verbunden ist, dessen Saugstromeinlass zur Zufuhr von Sattdampf aus dem Gebertank (200) mit diesem verbunden ist und dessen Mischstromauslass mit dem Gebertank (200) verbunden ist.

13. Vorrichtung nach einem der Ansprüche 9 bis 12, wobei eine Rückführleitung (111) vorgesehen ist, die den Mischstromauslass des Beladungs-Ejektors (230) mit dem Saugstromeinlass des Coldbox-Ejektors (430) nach Anspruch 12 oder mit einem Saugstromeinlass eines Kühlkreis-Ejektors verbindet.

14. Vorrichtung nach einem der Ansprüch 9 bis 13, soweit auf Anspruch 12 oder 13 zurückbezogen, wobei eine Rückführleitung (112) zur Leitung von Sattdampf aus dem Empfängertank (300) vorgesehen ist, die den Empfängertank (300) mit dem Saugstromeinlass des Coldbox-Ejektors (430) nach Anspruch 12 oder des Kühlkreis-Ejektors nach Anspruch 13 verbindet.

15. Vorrichtung nach einem der Ansprüche 9 bis 14, soweit auf Anspruch 11 zurückbezogen, wobei eine Rückführleitung (113) zur Leitung von Sattdampf aus dem Empfängertank (300) vorgesehen ist, die den Empfängertank (300) mit einem Anwärmer (140) verbindet, der seinerseits mit einem Kompressor-System (410) der Verflüssigungsanlage (400) verbunden ist.
